# EUROPEAN PATENT SPECIFICATION

(11) **EP 1 569 050 B1**
(45) Date of publication and mention of the grant of the patent: **18.06.2014**
(21) Application number: 05004083.1
(22) Date of filing: 24.02.2005
(51) Int. Cl.: G03G 21/16, G03G 21/18

(54) **Color image forming apparatus with door comprising a sheet transport belt**
Farbbilderzeugungsapparat mit Tür mit integriertem Blatttransportband
Appareil de formation d'image avec porte comprennant une bande de transport de feuilles

(30) Priority: 27.02.2004 JP 2004054332; 02.02.2005 JP 2005026529
(43) Date of publication of application: 31.08.2005
(73) Proprietor: CANON KABUSHIKI KAISHA, Tokyo (JP)
(72) Inventor: Kawai, Toshiharu, Tokyo (JP); Kotsuka, Hideki, Tokyo (JP)
(74) Representative: TBK

(56) References cited:
- EP-A- 0 346 934
- EP-A- 1 331 525
- EP-A- 1 387 226
- US-A- 5 208 612
- US-A- 5 444 515
- US-A1- 2003 156 856

## Description

### BACKGROUND OF THE INVENTION

### Field of the Invention

The present invention relates to an image forming apparatus utilizing an electrophotographic process or an electrostatic recording process such as a copying apparatus, a printer or a facsimile apparatus, and more particularly an image forming apparatus provided with an opening and closing device which is opened from or closed to a main body of the apparatus.

### Description of Related Art

A prior image forming apparatus particularly utilizing an electrophotographic process is often provided with a process cartridge integrally including a photosensitive member serving as an image bearing member and image forming device such as a developing apparatus for interaction therewith, or a unit containing consumables to be replaced or replenished by a user, such as a transfer material container (sheet cassette) containing a transfer material such as paper sheet for image formation. Also various proposals have been made for improving the operability at the replacement of the process cartridge or at a paper replenishment to the sheet cassette.

For example, JP-A-08-115042 discloses a structure in which attach-detach apertures for a unit for an image bearing member and a cassette for a recording medium are positioned on a same side of the main body of the image forming apparatus and have a same attach-detach direction.

Such a conventional structure, however, is a laterally opening type in which a front cover is opened about a vertical axis (hinge) and the front cover is merely supported at the hinge side, so that it is difficult to maintain a same positional precision of the front cover, to the main body of the apparatus, at left and at right (hinged side and opposite side).

Particularly in case image forming device is mounted on the front cover, the positional precision becomes different at the left and the right of the image forming apparatus, thus hindering a satisfactory image formation.

Thus, JP-A-06-110262 discloses an apparatus in which a front cover is opened downwards about a horizontal axis (vertical-opening type) for the replacement of a process unit. Such apparatus allows to maintain a same positional precision at the left and the right of the front cover.

It is described that, in such apparatus, a sheet cassette can be mounted and detached from the front side of the apparatus, but device which determines an open position of the front cover is not described, and the replacement of the process unit is made possible but the replacement of the sheet cassette may be hindered depending upon the open position of the front cover.

Also JP-A-08-022 157 and JP-A-2001-356550 describes an apparatus of vertical-opening type, but does not describe a device which positions the open/closing member (cover) by determining a certain open-position for the open/closing member (cover).

In a full-color image forming apparatus, there are provided with a plurality of process cartridges each having a photosensitive member for respective colors, and an improvement in the maintenance property because of an increased frequency of replacements. Also the presence of plural process cartridges tends to increase the dimension of the apparatus, and there is desired an apparatus capable of suppressing an increase in the dimension thereof even with an improved maintenance property.

The US-A-5 444515 discloses a color image forming apparatus with a rotatable door and developing units which can be detachably mounted in the main body when the door is open.

The EP-A-1 331 525 shows a similar color image forming apparatus, wherein the direction of the detachment of the image forming devices is inclined upwards. Furthermore, the image forming apparatus comprises a sheet container positioned below the plurality of image forming devices.

The EP-A-1 387 226 and the EP-A-0 346 934 disclose further image forming apparatuses.

### SUMMARY OF THE INVENTION

It is the object of the invention to provide an image forming apparatus capable of improving operability of detachable image forming device without increasing the dimension of the apparatus.

This object is achieved by an image forming apparatus having the features of claim 1. Advantageous further formations are subject of the dependent claims.

Still other objects of the present invention will become fully apparent from the following detailed description.

### BRIEF DESCRIPTION OF THE DRAWINGS

Fig. 1 is a view showing an image forming apparatus embodying the present invention;
Fig. 2 is a view showing an open door state;
Fig. 3 is a view showing an attaching/detaching guide for a cartridge and a cassette;
Fig. 4 is a view showing door positioning device in a closed door state;
Fig. 5 is a view showing a state where the door in an open state is positioned;
Fig. 6 is view showing an image forming apparatus of a comparative example;
Fig. 7 is a view showing door positioning device in an open door state; and
Fig. 8 is a view showing another image forming apparatus to which the invention is applicable.

### DETAILED DESCRIPTION OF THE PREFERRED EMBODIMENTS

In the following, an embodiment of the present invention will be explained with reference to the accompanying drawings.

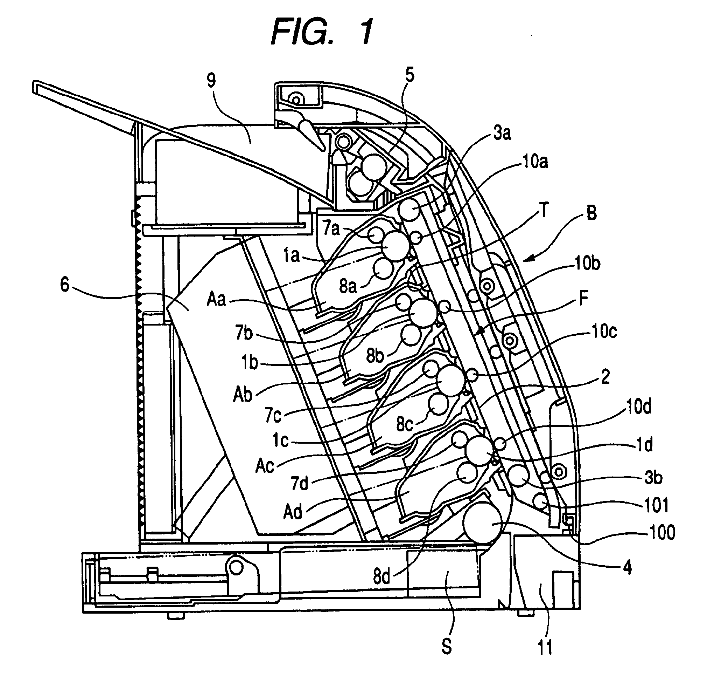

Fig. 1 is a vertical cross-sectional view of an electrophotographic image forming apparatus serving as a four-color full-color printer and constituting an example of the image forming apparatus embodying the present invention.

Now an image forming operation of this image forming apparatus will be explained with reference to Fig. 1.

The image forming apparatus is provided, respectively for black, cyan, magenta and yellow colors, with a plural of image forming devices (process cartridges) Aa, Ab, Ac and Ad. Each process cartridge integrally includes a drum-shaped electrophotographic photosensitive member (photosensitive drum) 1a, 1b, 1c or 1d constituting an image bearing member, and at least an image forming member acting on the photosensitive drum. The process cartridges Aa - Ad each individually is detachably mountable on a main body of the image forming apparatus.

The process cartridges Aa - Ad are respectively provided, in addition to the photosensitive drums, with charging rollers 7a, 7b, 7c, 7d and developing rollers 8a, 8b, 8c, 8d as image forming members.

In the process cartridges Aa - Ad, surfaces of the photosensitive drums 1a -1d are uniformly charged, in a charging step, by the charging rollers 7a - 7d, and, in an exposure step or a latent image forming step, are exposed to light in an area where an image is to be formed, by an exposure apparatus 6 such as a laser, thereby forming electrostatic latent images on the photosensitive drums 1a - 1d. Then the electrostatic latent images on the photosensitive drums 1a - 1d are developed by deposition of developers (toners) of respective colors by the developing rollers 8a - 8d, whereby developer images of the respective colors are formed on the photosensitive drums 1a - 1d.

On the other hand, in synchronization with the image formation on the process cartridges Aa - Ad, a recording material (transfer material) S such as paper, containing in a sheet cassette 1 constituting an recording material containing device is fed, by feed device such as a sheet feeding roller 4, onto a conveyor belt 2 constituting a conveying member. The conveyor belt 2 is opposed to the process cartridges Aa - Ad, more specifically to the photosensitive drums 1a - 1d, and is driven by a driving roller 3a whereby the recording material supported on the conveyor belt 2 is conveyed to such photosensitive drums 1a - 1d.

The conveyor belt 2 is supported under a tension between a driving roller 3a and an idler roller 3b, and, along a belt surface T thus formed, the process cartridges Aa - Ad are arranged in an array with the photosensitive drums 1a - 1d positioned at the side of the belt T.

Opposed areas of the photosensitive drums 1a - 1d and the belt surface T constitute transfer portions, and transfer rollers 10a, 10b, 10c, 10d constituting transfer members are positioned in such transport portions and at a side opposite to the side of the belt surface T opposed to the photosensitive drums 1a - 1d.

The toner images formed in the process cartridges Aa - Ad are transferred, in a transfer step, from the photosensitive drums 1a - 1d onto the recording material under a bias voltage application to the transfer rollers 10a - 10d, and, the recording material bearing the unfixed toner image is subjected, in a fixing step, to fixation of the image by heat and pressure in a fixing device 5, then discharged to a sheet discharge portion 9 and stacked.

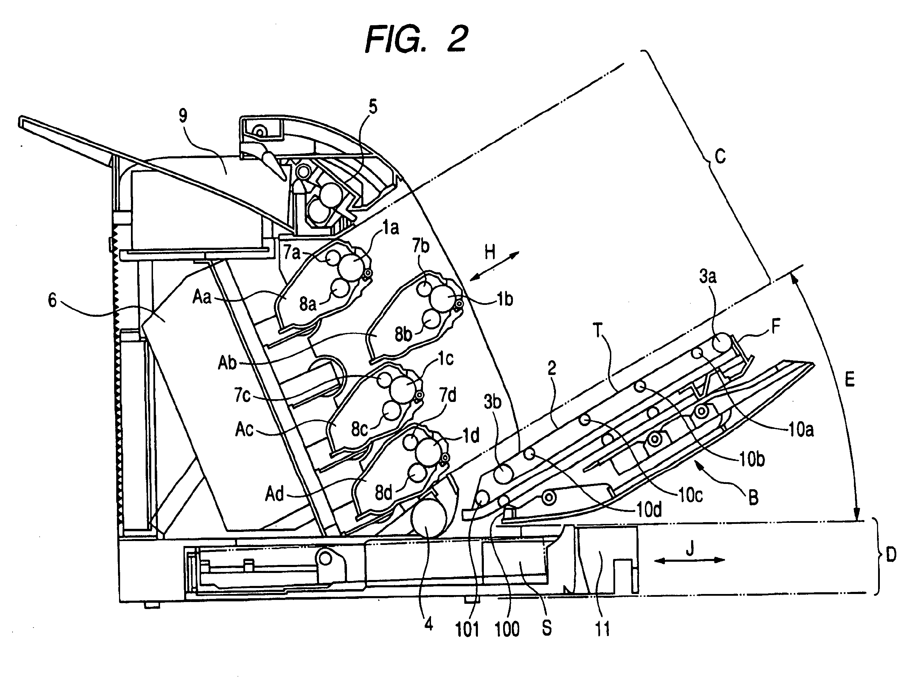

Then, with reference to Figs. 1 and 2, there will be explained an attaching/detaching operation for the process cartridges Aa - Ad of the present embodiment. A door B, constituting an opening and closing device which can be opened from or closed to the main body of the apparatus, is opened and closed for replacing the process cartridges or for a jam process. In the present embodiment, the door B is provided on a front surface (a side surface spreading in the substantially vertical direction) of the main body of the apparatus, and is opened and closed by a rotary motion about a support member 100 as a shaft provided along an axis in a substantially horizontal direction in a lower part. Thus, the door B is opened or closed at least involving a displacement in the vertical direction, is thus rendered displaceable about the shaft 100 provided in the substantially horizontal direction, and is opened from above to below.

Also the conveyor belt 2, the rollers 3a, 3b and the transfer rollers 10a - 10d are constructed as a unit of transfer-conveying device F, which is rendered capable of a rotary motion about a support member (shaft) 101 and is connected in an upper part with a link to the door B, whereby the transfer-conveying device F can be simultaneously opened by opening the door B. Stated differently, the transfer-conveying device F is supported by the door B. In the open state, the belt surface T of the conveyor belt 2 is positioned upward.

In the aforementioned image forming apparatus, the process cartridges Aa - Ad and the sheet cassette 11 are constructed as consumable-containing units which are rendered mountable on and detachable from the main body of the apparatus. The sheet cassette 11 is mounted and detached for example for replenishing or replacing the paper sheets. Access positions to the door B and to the process cartridges Aa - Ad and the sheet cassette 11 are all provided in the front side of the apparatus, and the access to such door B and to such process cartridges Aa - Ad and sheet cassette 11 can be made from a same direction.

Fig. 2 shows an attach/detach operation(an attaching or detaching operation) for example for replacing the process cartridges Aa - Ad and an attach/detach operation(an attaching or detaching operation) for the sheet cassette 11 for example for sheet replenishment. By opening the door B supporting the conveyor belt 2, the driving roller 3a and the idler roller 3b, the process cartridges Aa - Ad can be accessed and can be detached or mounted.

As shown in Fig. 2, the process cartridges Aa - Ad are extracted in an obliquely upward direction (direction H), while the sheet cassette 11 is extracted in a substantially horizontal direction (direction J). Thus, a surface of the main body of the image forming apparatus for mounting or detaching the process cartridges Aa - Ad and a surface of the main body of the image forming apparatus for mounting or detaching the sheet cassette 11 are positioned in a same side, whereby the attach/detach operation for the process cartridges Aa - Ad and the attach/detach operation for the sheet cassette 11 are executed at a same side of the main body of the image forming apparatus.

However, an attach/detach direction(an attaching or detaching direction) for the process cartridges Aa - Ad is different from an attach/detach direction(an attaching or detaching direction) for the sheet cassette 11.

In the present embodiment, as shown in Fig. 1, the belt surface T is provided along a vertically inclined direction, namely in a direction inclined from a vertical direction. The belt surface T is inclined along a direction in which the belt surface T is shifted, from below to above, toward the process cartridges. Therefore, the process cartridges Aa - Ad are arranged obliquely, with the photosensitive drums 1a - 1d directed upwards. Thus the plural process cartridges Aa - Ad are inclined from the vertical direction, and an upper positioned cartridge (for example Ac) among the plural process cartridges Aa - Ad is more distant from the side of the door B than a lower positioned cartridge (for example Ad). In this manner, the upper positioned cartridge (for example Ac) is positioned, with respect to the lower positioned cartridge (for example Ad), opposite to the door B.

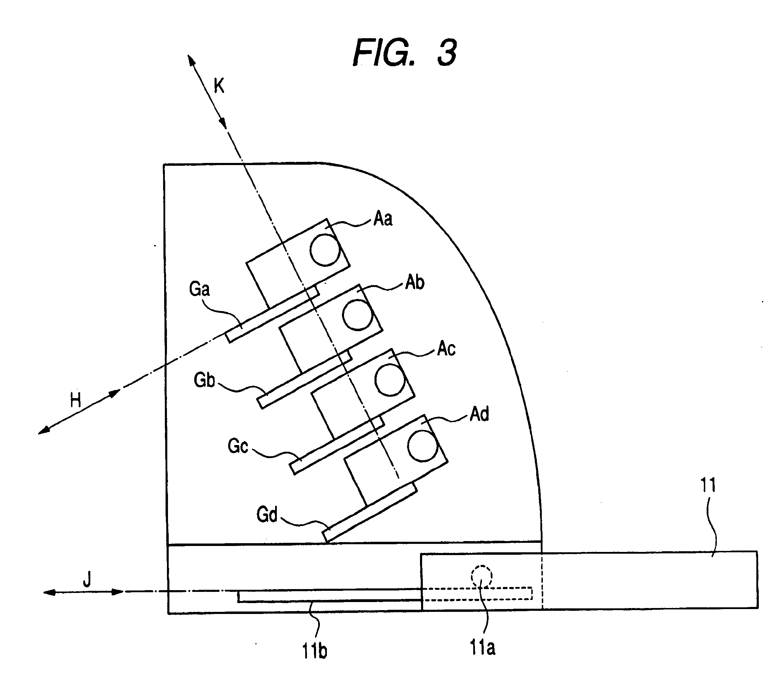

Fig. 3 schematically shows a guide used in attaching or detaching the process cartridges and the sheet cassette 11. Cartridge guide members Ga, Gb, Gc and Gd are provided for respectively guiding the process cartridges Aa - Ad, which can be attached to or detached from the main body of the apparatus by moving the process cartridges Aa - Ad along a direction H. There are shown an engaging protrusion 11a provided on the sheet cassette 11 and a cassette guide member 11b which engages with the engaging protrusion 11a thereby guiding the displacement of the sheet cassette 11, which can be attached to or detached from the main body of the apparatus by moving the sheet cassette 11 along a direction J. The attach/detach operation of the sheet cassette 11 is executed in a lower part of the door B, with a substantially horizontal attach/detach direction J. Thus, the attach/detach direction H for the process cartridges Aa - Ad is different from the attach/detach direction J for the sheet cassette 11.

A direction K of array of the process cartridges Aa - Ad is substantially perpendicular, in the present embodiment, to the attach/detach direction of the process cartridges Aa - Ad.

Thus, in the present embodiment, the attach/detach direction of the process cartridges Aa - Ad is rendered oblique to the attach/detach direction of the sheet cassette 11, thereby securing an area C (called attach/detach trajectory(attaching or detaching trajectory) of process cartridges) as shown in Fig. 2, defined by trajectories of the process cartridges Aa - Ad at the attach/detach operation thereof. Thus, there is secured the area C as an area in which the process cartridges Aa - Ad are rendered movable, parallel to an extension of the attach/detach direction of the process cartridges Aa - Ad, extending in an obliquely upward direction from the door B and the sheet cassette 11. Also there is secured an area D (called attach/detach trajectory(attaching or detaching trajectory) of cassette 11) constituting a lower and horizontal trajectory for the attach/detach operation of the sheet cassette 11. Thus, there is secured the area D as an area in which the sheet cassette 11 is rendered movable, parallel to an extension of the attach/detach direction of the sheet cassette 11. Also, in an opened state of the door B, the door B is positioned and fixed in a position in an area E defined between the areas C and D.

In the present embodiment, therefore, it is rendered possible to attach or detach the process cartridges Aa - Ad and the sheet cassette 11 at the same time while suppressing the entire height of the apparatus, thereby improving the operability.

Also in the present embodiment, as the process cartridges Aa - Ad are inclined not only in the attach/detach direction thereof but also in the direction of arrangement thereof, even a lower process cartridge can be attached or detached without interfering with the upper process cartridges, whereby the process cartridge is not restricted in shape.

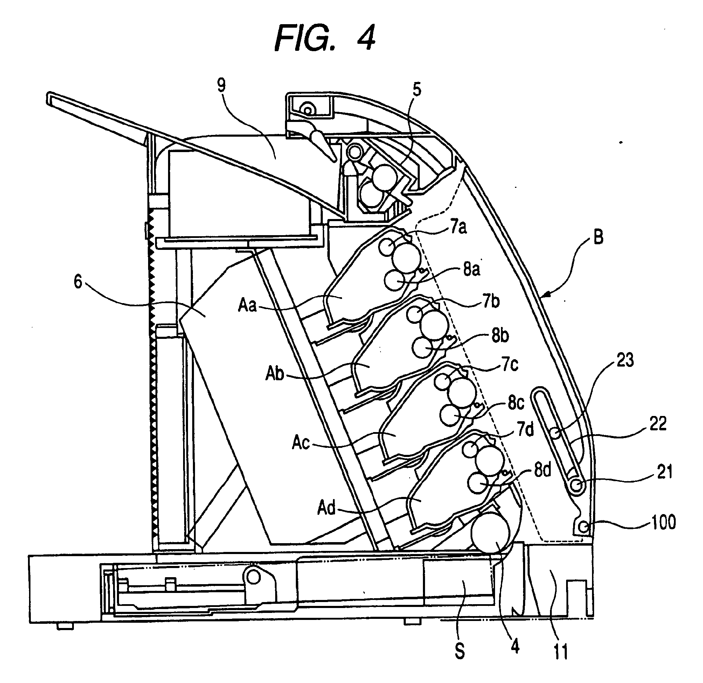

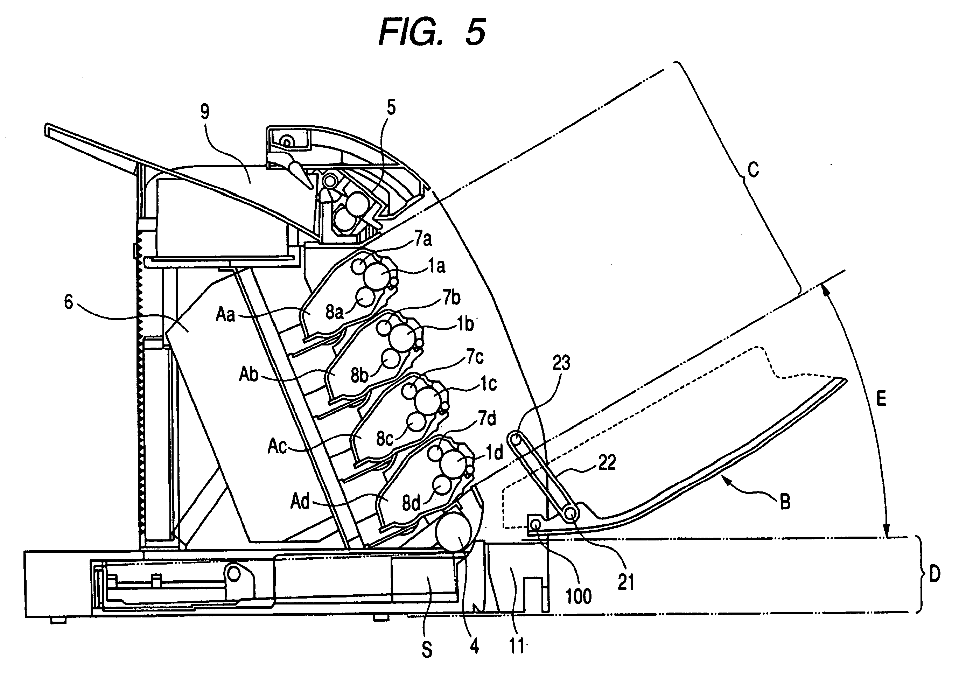

Figs. 4 and 5 illustrate positioning device for positioning the door B when it is opened.

There are shown a rotary shaft (protruding portion) 21 provided on the door B, an engaging protrusion 22 provided on the main body of the apparatus, and an engaging member 22 rendered rotatable about the rotary shaft 21 and having an elongated hole in which the engaging protrusion can engage. Such rotary shaft 21, engaging protrusion 23 and engaging member 22 constitute the positioning device at the opened state of the door B.

When the door B is opened from a state shown in Fig. 4 to a state shown in Fig. 5, the rotary shaft 21 is displaced with a displacement of the engaging member 22, and, when an end of the elongated hole of the engaging member 22 comes into a contact with the engaging protrusion 23 thereby inhibiting the displacement of the engaging member 22, the door B is fixed and positioned in such position.

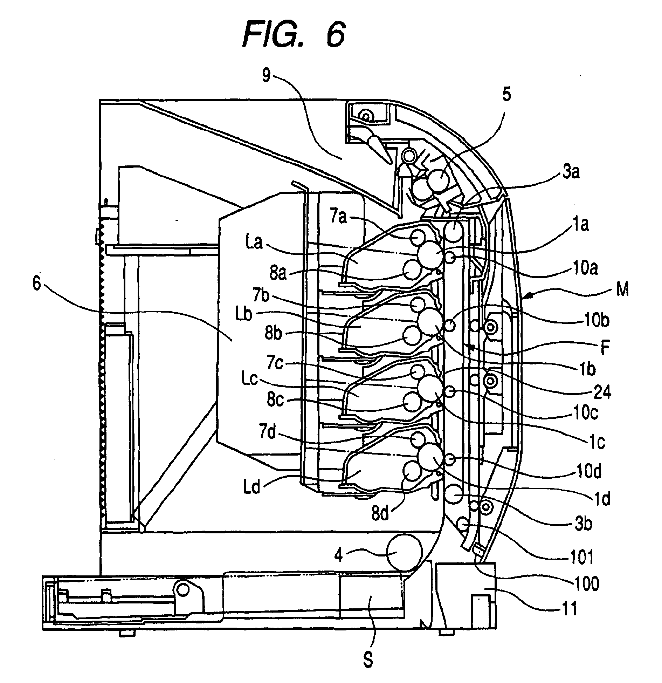

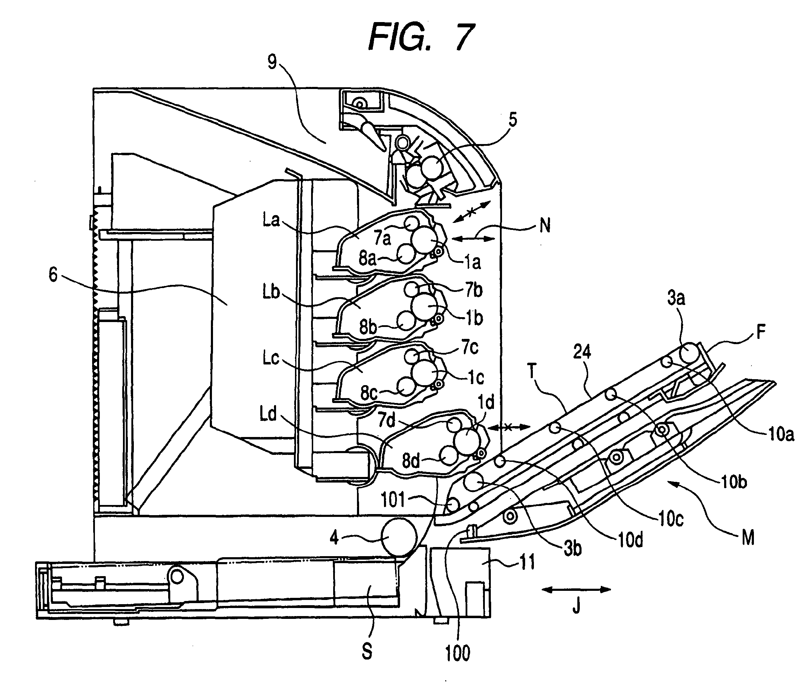

Now an image forming apparatus shown in Figs. 6 and 7 will be explained as a comparative example. The image forming apparatus shown in Fig. 6 has constituting components same as those in the embodiment of the invention shown in Fig. 1, but a sheet conveying path constituted of photosensitive drums 1a - 1d and a conveyor belt 24 in cartridges La, Lb, Lc and Ld are not inclined obliquely but is provided in the vertical direction.

In this comparative example, the uppermost cartridge La cannot be attached or detached in an inclined direction because of the presence of a fixing device 5 above. In order to avoid such drawback, the attach/detach direction of the cartridges La - Ld has to be selected in a horizontal direction N. If the opening angle of a door M is defined, in a similar manner as in Fig. 2, so as to enable the attach/detach operation of a sheet cassette 11 in the horizontal direction J, the lowermost cartridge Ld comes into contact with the door M and cannot therefore be attached or detached. In order to enable an attach/detach operation of the cartridge Ld, the door M has to be rotated by at least 90° until the belt 24 becomes horizontal, and then the sheet cassette 11 cannot be attached or detached.

In the comparative example, therefore, it is not possible to execute the attach/detach operation of the cartridges La - Ld and the attach/detach operation of the sheet cassette at the same time in a state where the door M is fixed in a certain open position.

Also in order to enable the attach/detach operation of the sheet cassette 11 even when the door M is opened until the belt 24 becomes horizontal, it is conceivable to increase the gap between the sheet cassette 11 and the cartridge Ld or to increase the gap between the cartridge La and the fixing device 5 thereby enabling the attach/detach operation in an oblique direction, but such methods inevitably increase the height of the image forming apparatus, thereby resulting in an undesirably bulky structure thereof.

Thus, in the present embodiment, the attach/detach direction of the process cartridge Aa - Ad is inclined with respect to the attach/detach direction of the sheet cassette 11, to form an attach/detach trajectory in the area C shown in Fig. 2, while a space is defined as the area E between the area C and the area D constituting an attach/detach trajectory of the sheet cassette 11, and the door B in an open state is provided in such space. It is thus rendered possible to attach/detach the process cartridges Aa - Ad and the sheet cassette 11 at the same time thereby improving the operability. The operability can be further improved as the open/close operation of the door, the attach/detach operation of the process cartridges and the attach/detach operation of the sheet cassette can all be executed in a same direction with respect to the main body of the apparatus.

Furthermore, the apparatus can be made further compact by providing the sheet conveying path in an inclined position.

In the present embodiment, "the process cartridges and the sheet cassette can be attached or detached at the same time" in the embodiment implies that both the process cartridges and the sheet cassette can be accessed without further moving the door in the open state.

In the present embodiment, the sheet cassette is attached or detached in the horizontal direction, but such configuration is not restrictive.

Also the present embodiment is constructed as a full-color printer utilizing four process cartridges, but a monochromatic printer utilizing one process cartridge only can also be constructed, and a similar effect can also be obtained by constructing the conveyor belt with a conveying roller or the like.

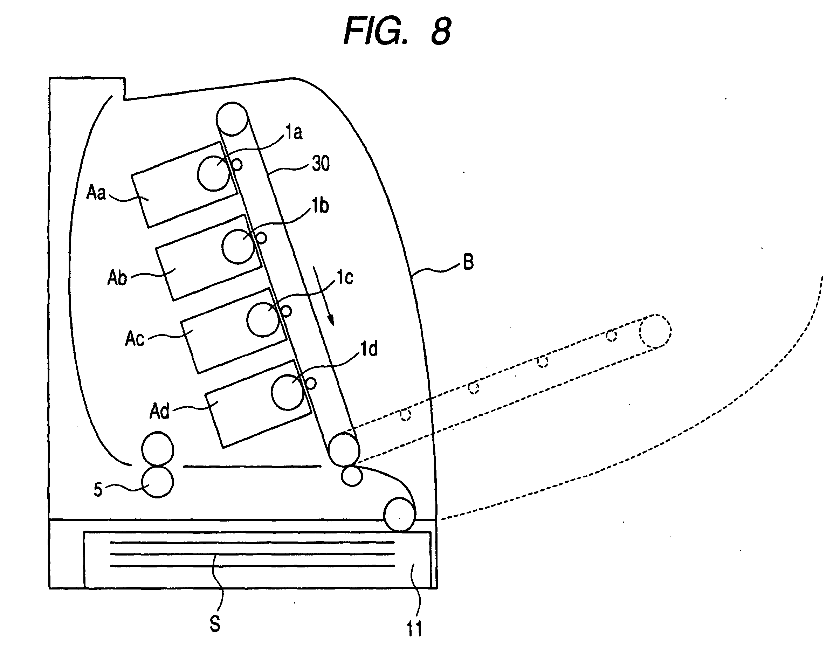

Also in the present embodiment, the conveying member moving in opposition to the photosensitive drum is constituted of a conveyor belt for conveying a recording material, but it may also be constituted of an intermediate transfer member (intermediate transfer belt) for bearing and carrying a toner image. Thus the present invention is applicable also to an image forming apparatus of an intermediate transfer type as shown in Fig. 8, in which a toner image is transferred from an image bearing member 1 onto an intermediate transfer member 30 whereby plural toner images are once borne on the intermediate transfer member and then collectively transferred onto a recording material S.

As to the components of the aforementioned image forming apparatus, a dimension, a material, a shape, a relative position and the like are not to be construed to limit the invention to such description, unless a particularly specifying description is provided.

The present invention has been explained by an embodiment, but the invention is not at all limited to such embodiment and is subject to any and all modifications within the scope of the invention as defined by the following claims.

## Claims

1. An image forming apparatus comprising:
an opening and closing device (B) that is capable of being opened or closed with respect to a main body of the image forming apparatus;
a support member (100) which pivotably supports said opening and closing device (B);
a plurality of image forming devices (Aa, Ab, Ac, Ad) which is capable of being detachably mounted on the main body in a state where said opening and closing device (B) is opened;
a recording material containing device (1) which contains a recording material and which is capable of being detachably mounted on the main body,
wherein said plurality of image forming devices (Aa, Ab, Ac, Ad) are provided above said recording material containing devices (1),
wherein the image forming apparatus is configured such that both attaching or detaching said recording material containing device (1) and attaching or detaching said plurality of image forming devices (Aa, Ab, Ac, Ad) are performed at the same side of the main body, a detaching direction of said plurality of image forming devices (Aa, Ab, Ac, Ad) is inclined upwards, while a detaching direction of said recording material containing device (1) is substantially horizontal,
a positioning device (22, 23) for positioning said opening and closing device (B) by limiting the movement of said opening and closing device (B) when said opening and closing device (B) is opened around said support member (100);
wherein said positioning device (22, 23) positions said opening and closing device (B) in a space defined between an attaching or detaching trajectory of said plurality of image forming devices (Aa, Ab, Ac, Ad) and an attaching or detaching trajectory of said recording material containing device (1).

2. An image forming apparatus according to claim 1, wherein said support member (100) is a shaft, said opening and closing device (B) is movable about said shaft provided in a substantially horizontal direction.

3. An image forming apparatus according to claim 2, wherein said opening and closing device (B) is opened from above to below.

4. An image forming apparatus according to claim 1, wherein each of said plurality of image forming devices (Aa, Ab, Ac, Ad) is a cartridge integrally including a photosensitive member (1a, 1b, 1c, 1d) and at least an image forming member (8a, 8b, 8c, 8d) acting on said photosensitive member (1a, 1b, 1c, 1d), and a plurality of said cartridges correspond respectively to different colors.

5. An image forming apparatus according to claim 1, further comprising a transfer-conveying device (F) opposed to said plurality of image forming devices (Aa, Ab, Ac, Ad) and supported by said opening and closing device (B), wherein said transfer-conveying device (F) is capable of being opened in linkage with an opening operation of said opening and closing device (B) and positioned at said space.

6. An image forming apparatus according to claim 5, wherein said transfer-conveying device (F) comprises a belt (2).

7. An image forming apparatus according to claim 1, wherein all of said image forming devices (Aa, Ab, Ac, Ad) are positioned in a line inclined backwards with respect the vertical direction, such that an upper positioned cartridge among the plural process cartridges is more distant from the side of said opening and closing device (B) than a lower positioned cartridge.

8. An image forming apparatus according to claim 7, wherein the direction of arrangement of said plurality of image forming devices (Aa, Ab, Ac, Ad) is substantially perpendicular to an attaching or detaching direction of said plurality of image forming devices (Aa, Ab, Ac, Ad).

9. An image forming apparatus according to claim 1, wherein one of said plurality of image forming devices (Aa, Ab, Ac, Ad) is provided above another of said plurality of image forming devices (Aa, Ab, Ac, Ad).

## Patentansprüche

1. Bilderzeugungsvorrichtung mit
einer Öffnungs- und Schließeinrichtung (B), die in Bezug auf einen Grundkörper der Bilderzeugungsvorrichtung geöffnet oder geschlossen werden kann;
einem Halteelement (100), das die Öffnungs- und Schließeinrichtung (B) schwenkbar hält;
einer Vielzahl von Bilderzeugungseinrichtungen (Aa, Ab, Ac, Ad), die in einem Zustand, in dem die Öffnungs- und Schließeinrichtung (B) geöffnet ist, entnehmbar an dem Grundkörper montierbar sind;
einer Aufzeichnungsmaterialaufnahmeeinrichtung (1), die ein Aufzeichnungsmaterial aufnimmt, und die entnehmbar an dem Grundkörper montierbar ist,
wobei die Vielzahl von Bilderzeugungseinrichtungen (Aa, Ab, Ac, Ad) oberhalb der Aufzeichnungsmaterialaufnahmeeinrichtung (1) vorgesehen sind,
wobei die Bilderzeugungsvorrichtung so gestaltet ist, dass sowohl das Einsetzen oder Entnehmen der Aufzeichnungsmaterialaufnahmeeinrichtung (1) als auch das Einsetzen oder Entnehmen der Vielzahl von Bilderzeugungseinrichtungen (Aa, Ab, Ac, Ad) an derselben Seite des Grundkörpers durchgeführt werden, wobei eine Entnahmerichtung der Vielzahl von Bilderzeugungseinrichtungen (Aa, Ab, Ac, Ad) aufwärts schräg ist, während eine Entnahmerichtung der Aufzeichnungsmaterialaufnahmeeinrichtung (1) im Wesentlichen horizontal ist,
einer Positioniereinrichtung (22, 23) zum Positionieren der Öffnungs- und Schließeinrichtung (B) durch Begrenzen der Bewegung der Öffnungs- und Schließeinrichtung (B), wenn die Öffnungs- und Schließeinrichtung (B) um das Halteelement (100) herum geöffnet wird;
wobei die Positioniereinrichtung (22, 23) die Öffnungs- und Schließeinrichtung (B) in einem Bereich positioniert, der zwischen einer Einsetz- oder Entnahmetrajektorie der Vielzahl von Bilderzeugungseinrichtungen (Aa, Ab, Ac, Ad) und einer Einsetz- oder Entnahmetrajektorie der Aufzeichnungsmaterialaufnahmeeinrichtung (1) festgelegt ist.

2. Bilderzeugungsvorrichtung nach Anspruch 1, wobei das Halteelement (100) eine Welle ist, wobei die Öffnungs- und Schließeinrichtung (B) um die Welle beweglich ist, die im Wesentlichen in horizontaler Richtung vorgesehen ist.

3. Bilderzeugungsvorrichtung nach Anspruch 2, wobei die Öffnungs- und Schließeinrichtung (B) von oben nach unten geöffnet wird.

4. Bilderzeugungsvorrichtung nach Anspruch 1, wobei jede der Vielzahl von Bilderzeugungseinrichtungen (Aa, Ab, Ac, Ad) ein Einsatz mit einem integrierten lichtempfindlichen Element (1a, 1b, 1c, 1d) sowie mindestens einem Bilderzeugungselement (8a, 8b, 8c, 8d) ist, das auf das lichtempfindliche Element (1a, 1b, 1c, 1d) einwirkt, und wobei eine Vielzahl der Einsätze jeweils unterschiedlichen Farben entsprechen.

5. Bilderzeugungsvorrichtung nach Anspruch 1 ferner mit einer der Vielzahl von Bilderzeugungseinrichtungen (Aa, Ab, Ac, Ad) gegenüberliegenden Überführungsfördereinrichtung (F), die durch die Öffnungs- und Schließeinrichtung (B) gehaltenen ist, wobei die Überführungsfördereinrichtung (F) in Koppelung mit einem Öffnungsvorgang der Öffnungs- und Schließeinrichtung (B) geöffnet werden kann und in dem Bereich positioniert ist.

6. Bilderzeugungsvorrichtung nach Anspruch 5, wobei die Überführungsfördereinrichtung (F) ein Band (2) hat.

7. Bilderzeugungsvorrichtung nach Anspruch 1, wobei alle der Bilderzeugungseinrichtungen (Aa, Ab, Ac, Ad) auf einer Linie positioniert sind, die in Bezug auf die senkrechte Richtung rückwärts geneigt ist, so dass ein höher positionierter Einsatz von der Mehrzahl von Aufbereitungseinsätzen weiter von der Seite der Öffnungs- und Schließeinrichtung (B) entfernt ist als ein niedriger positionierter Einsatz.

8. Bilderzeugungsvorrichtung nach Anspruch 7, wobei die Richtung der Anordnung der Vielzahl von Bilderzeugungseinrichtungen (Aa, Ab, Ac, Ad) im Wesentlichen senkrecht zu einer Einsetz- oder Entnahmerichtung der Vielzahl von Bilderzeugungseinrichtungen (Aa, Ab, Ac, Ad) ist.

9. Bilderzeugungsvorrichtung nach Anspruch 1, wobei eine aus der Vielzahl von Bilderzeugungseinrichtungen (Aa, Ab, Ac, Ad) über einer anderen aus der Vielzahl von Bilderzeugungseinrichtungen (Aa, Ab, Ac, Ad) vorgesehen ist.

## Revendications

1. Appareil de formation d'image comprenant :
un dispositif (B) d'ouverture et de fermeture qui est capable d'être ouvert ou fermé par rapport au corps principal de l'appareil de formation d'image ;
un élément support (100) qui supporte de façon pivotante ledit dispositif (B) d'ouverture et de fermeture ;
une pluralité de dispositifs (Aa, Ab, Ac, Ad) de formation d'image qui est capable de se monter de façon amovible sur le corps principal dans l'état où ledit dispositif (B) d'ouverture et de fermeture est ouvert ;
un dispositif (1) contenant de la matière d'enregistrement qui contient une matière d'enregistrement et qui est capable de se monter de façon amovible sur le corps principal,
dans lequel les dispositifs de ladite pluralité de dispositifs (Aa, Ab, Ac, Ad) de formation d'image sont disposés au-dessus dudit dispositif (1) contenant la matière d'enregistrement,
dans lequel l'appareil de formation d'image est constitué de façon qu'à la fois le montage ou le démontage dudit dispositif (1) contenant la matière d'enregistrement et le montage ou le démontage de ladite pluralité de dispositifs (Aa, Ab, Ac, Ad) de formation d'image se fassent du même côté du corps principal, que la direction de démontage de ladite pluralité de dispositifs (Aa, Ab, Ac, Ad) de formation d'image soit inclinée vers le haut, tandis que la direction de démontage dudit dispositif (1) contenant la matière d'enregistrement est pratiquement horizontale ;
un dispositif (22, 23) de positionnement destiné à positionner ledit dispositif (B) d'ouverture et de fermeture en limitant le déplacement dudit dispositif (B) d'ouverture et de fermeture lorsque l'on ouvre ledit dispositif (B) d'ouverture et de fermeture autour dudit élément support (100),
dans lequel ledit dispositif (22, 23) de positionnement positionne ledit dispositif (B) d'ouverture et de fermeture dans un espace défini entre la trajectoire de montage ou de démontage de ladite pluralité de dispositifs (Aa, Ab, Ac, Ad) de formation d'image et la trajectoire de montage ou de démontage dudit dispositif (1) contenant la matière d'enregistrement.

2. Appareil de formation d'image selon la revendication 1, dans lequel ledit élément support (100) est un axe, ledit dispositif (B) d'ouverture et de fermeture est mobile autour dudit axe disposé dans une direction pratiquement horizontale.

3. Appareil de formation d'image selon la revendication 2, dans lequel ledit dispositif (B) d'ouverture et de fermeture s'ouvre de haut en bas.

4. Appareil de formation d'image selon la revendication 1, dans lequel chacun de ladite pluralité de dispositifs (Aa, Ab, Ac, Ad) de formation d'image est une cartouche incluant d'un seul bloc un organe photosensible (1a, 1b, 1c, 1d) et au moins un organe (8a, 8b, 8c, 8d) de formation d'image agissant sur ledit organe photosensible (1a, 1b, 1c, 1d), et dans lequel les cartouches de la pluralité desdites cartouches correspondent respectivement à des couleurs différentes.

5. Appareil de formation d'image selon la revendication 1, comprenant en outre un dispositif (F) de transfert-défilement en face de ladite pluralité de dispositifs (Aa, Ab, Ac, Ad) de formation d'image et supporté par ledit dispositif (B) d'ouverture et de fermeture, dans lequel ledit dispositif (F) de transfert-défilement peut être ouvert en liaison avec l'opération d'ouverture dudit dispositif (B) d'ouverture et de fermeture et est positionné au niveau dudit espace.

6. Appareil de formation d'image selon la revendication 5, dans lequel ledit dispositif (F) de transfert-défilement comprend une bande (2).

7. Appareil de formation d'image selon la revendication 1, dans lequel tous lesdits dispositifs (Aa, Ab, Ac, Ad) de formation d'image sont placés suivant une ligne inclinée vers l'arrière par rapport à la direction verticale, de sorte qu'une cartouche placée plus haut parmi les plusieurs cartouches de traitement est plus éloignée du côté dudit dispositif (B) d'ouverture et de fermeture qu'une cartouche placée plus bas.

8. Appareil de formation d'image selon la revendication 7, dans lequel la direction d'agencement de ladite pluralité de dispositifs (Aa, Ab, Ac, Ad) de formation d'image est pratiquement perpendiculaire à la direction de montage ou de démontage de ladite pluralité de dispositifs (Aa, Ab, Ac, Ad) de formation d'image.

9. Appareil de formation d'image selon la revendication 1, dans lequel un de ladite pluralité de dispositifs (Aa, Ab, Ac, Ad) de formation d'image est disposé au-dessus d'un autre de ladite pluralité de dispositifs (Aa, Ab, Ac, Ad) de formation d'image.
